# DEMANDE DE BREVET EUROPEEN

(11) **EP 4 491 034 A1**
(43) Date de publication de la demande: **15.01.2025**
(21) Numéro de dépôt: 24184483.6
(22) Date de dépôt: 25.06.2024
(51) Int. Cl.: A23L 2/84, A23L 5/20, B01D 15/00, C08B 37/08, C12H 1/056

(54) **PROCÉDÉ DE CAPTATION DE MÉTAUX DANS UN LIQUIDE INGÉRABLE**

(30) Priorité: 26.06.2023 FR 2306681
(71) Demandeur: M&Wine, 69270 Fontaines Sant-Martin (FR); Centre National de la Recherche Scientifique, 75016 Paris (FR); UNIVERSITE CLAUDE BERNARD - LYON 1, 69100 Villeurbanne (FR); Institut National des Sciences Appliquees de Lyon (Insa Lyon), 69100 Villeurbanne (FR); Université Jean Monnet Saint-Étienne, 42023 Saint-Étienne Cedex 2 (FR)
(72) Inventeur: TILLEMENT, Théodore, 69270 FONTAINES SAINT-MARTIN (FR); Rossetti, fabien, 69100 VILLEURBANNE (FR); TILLEMENT, Olivier, 69270 FONTAINES SAINT-MARTIN (FR); LUX, François, 69100 VILLEURBANNE (FR); DAVID, Laurent, 69004 LYON (FR); DUROUX, Coraline, 01500 AMBERIEU EN BUGEY (FR); HAGEGE, Agnes, 69003 LYON (FR); DURANT, Arthur, 63720 CLERLANDE (FR)
(74) Mandataire: Plasseraud IP

(57) **Abrégé**

L'invention concerne un procédé de traitement d'un liquide ingérable, de préférence alimentaire, et en particulier une boisson présentant une teneur en alcool supérieure ou égale à 3 en % volumique et -selon un ordre croissant de préférence- supérieure ou égale 3,5 ; 4 ; 4,5 ; 5 en % volumique consistant essentiellement à mettre ledit liquide ingérable en contact avec un gel, ledit gel comprenant au moins un polysaccharide statistique de formule I présentant une masse moléculaire moyenne en poids comprise entre 100kDa et 10000kDa : 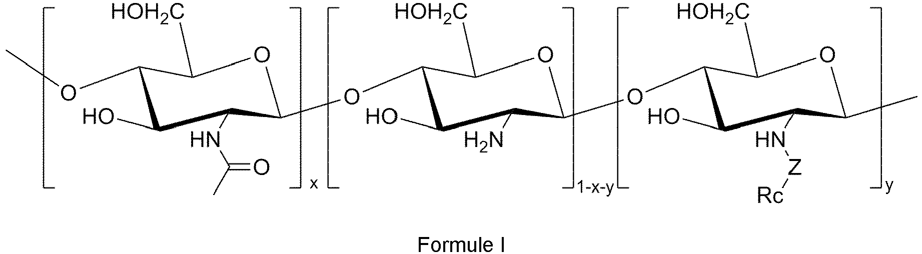 dans laquelle
Rc est un groupement comportant un agent chélatant,
Z est un liant pouvant être une simple liaison ou une chaîne hydrocarbonée comportant entre 1 et 12 atomes de carbone, ladite chaine pouvant être linéaire ou ramifiée, pouvant comporter une ou plusieurs insaturations et pouvant comporter un ou plusieurs hétéroatomes, de préférence choisis parmi l'azote, l'oxygène, le soufre et les atomes de la famille des halogènes,
x est compris entre 0,005 et 0,6,
y est compris entre 0,05 et 0,5,
le rapport y/x étant supérieur à 0,2, et
la somme x + y étant supérieure à 0,1.

## Description

### Domaine technique

La présente invention relève du domaine du traitement de liquides ingérables, en particulier des boissons alcooliques. Plus précisément, la présente invention concerne l'extraction de métaux par un auxiliaire technologique à base d'un chitosane porteur d'au moins un groupement chélatant.

### Technique antérieure

De manière générale, les éléments minéraux font partie intégrante des liquides ingérables, tels que les boissons alcooliques.

Dans certains cas, la présence de cations métalliques, notamment en excès, peut être préjudiciable. Par exemple, la présence de métaux lourds tels que le plomb et le cadmium, pour des raisons sanitaires, doit être évitée au maximum. Dans le domaine des vins, en particulier, les oligo-métaux de type métaux de transitions comme le fer, le manganèse et le cuivre peuvent être préjudiciables. En effet, au-delà des défauts visibles comme la « casse ferrique ou cuivreuse » par formation de précipités gênants, ces métaux peuvent être impliqués dans des réactions d'oxydations qui affectent la stabilité du vin (Nikolantonaki et al., revue des oenologues juillet 2022, pages 33-34 ; Tariba Biol. Trace Elem. Res. (2011) 144 :143-156)

Il est connu que le fer et le cuivre sont des catalyseurs de réactions d'oxydation, en particulier au sein de la réaction de Fenton où ils interviennent comme catalyseur de la production d'espèces réactives de l'oxygène. Ils favorisent ainsi la dégradation du vin lors de son stockage. Pour compenser cette faible stabilité les vignerons peuvent être amenés à ajouter des sulfites, agents stabilisants bien connus dans le domaine des vins. Cependant, ces agents sont controversés pour leur impact négatif sur le ressenti des vins chez certains consommateurs.

Une solution alternative, pour améliorer la stabilité d'un vin, est l'extraction de traces métalliques. Des chélateurs conventionnels de métaux (Kreitman et al. J. Agric. Food Chem. 2013, 61,39, 9480-9487) ont été étudiés et ont montré un impact sur l'oxydation, mais leur utilisation est très complexe comme additif exogène. Par ailleurs, ces chélateurs sont dispersés et font partie de la boisson destinée à être consommée car ceux-ci ne sont pas extraits de la boisson avant consommation.

L'utilisation de résines échangeuses ioniques a aussi été proposée pour des vins doux (Tamasi et al. Molecules 2018, 23, 2873). Bien qu'il ait été montré une efficacité pour diminuer l'opalescence et les dépôts de tartrates, observables à forte concentration, cette solution n'est pas adaptée pour diminuer les concentrations à des valeurs plus basses, critiques aussi pour la stabilité oxydative. De plus, cette solution a un impact sur l'indice couleur de l'ordre de 15%, implique une manipulation importante du vin et a un effet direct sur les arômes et la qualité organoleptique. Si un effet a été démontré pour le zinc, le manganèse, le cuivre et sur un élément minéral principal comme le calcium, aucun effet n'a été démontré pour les traces métalliques plus faibles (métaux lourds, fer). Ainsi, ces résines sont adaptées pour lisser les fortes concentrations de cations métalliques, mais pas pour extraire spécifiquement des traces métalliques critiques. En outre, la surface large d'une telle résine a un impact organoleptique avec la déplétion simultanée par chimisorption de molécules aromatiques moins hydrophiles.

Des biopolymères comme le chitosane ont également être utilisés. Grâce à leurs fonctions amines, de tels biopolymères peuvent en effet chélater certains métaux. L'Organisation Internationale de la vigne et du Vin (OIV) autorise l'utilisation de chitosane en traitement préventif des casses ferriques et cuivreuses sur les moûts et les vins à la dose maximale de 100 g/hl, les doses usuelles variant de 10 à 50 g/hl. On peut citer par exemple la brochure Qi Trapqing (https://ioc.eu.com/wp-content/uploads/2017/09/38b60e97dff3ab352626b108df380b78-Plaq-Qi-Trapping--FR-.pdf).

Cependant, même si cette solution demeure intéressante pour limiter les précipitations, cette capacité à chélater diminue fortement dans des conditions de solvant en partie alcoolique ainsi qu'à pH acide, notamment en raison de la protonation des fonctions amines ce qui est confirmé dans la brochure Qi Trapqing mentionnée ci-dessus. En particulier, il n'est pas possible d'extraire des métaux présents à une teneur inférieure à 1 mg/L. Par ailleurs, la mise en contact du chitosane est réalisée sous forme de suspension ce qui nécessite un filtrage avant consommation. Cette technologie ne peut donc pas être mise en oeuvre dans une bouteille destinée à la vente, ou alors le chitosane chélaté sera ingéré par le consommateur. Également, les chitosanes étant au moins partiellement soluble, leur présence peut impacter la qualité du vin.

Il existe donc un besoin de développer une solution permettant d'extraire des métaux présents, dans un liquide alimentaire, dans des concentrations de l'ordre de la trace tout en limitant autant que possible les interactions avec les autres molécules du liquide alimentaire, notamment lorsqu'il s'agit de vin, en particulier en condition alcoolique et/ou acide.

### Résumé

Afin de répondre à ce besoin, il est proposé un procédé de traitement d'un liquide ingérable, de préférence alimentaire, consistant essentiellement à mettre ledit liquide ingérable en contact avec un gel, ledit gel comprenant au moins un polysaccharide statistique de formule I présentant une masse moléculaire moyenne en poids comprise entre 100kDa et 10000kDa : 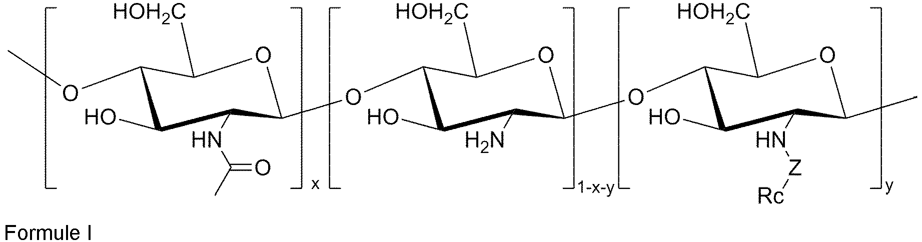 dans laquelle
Rc est un groupement comportant un agent chélatant,
Z est un liant pouvant être une simple liaison ou une chaîne hydrocarbonée comportant entre 1 et 12 atomes de carbone, ladite chaîne pouvant être linéaire ou ramifiée, pouvant comporter une ou plusieurs insaturations et pouvant comporter un ou plusieurs hétéroatomes, de préférence choisis parmi l'azote, l'oxygène, le soufre et les atomes de la famille des halogènes,
x est compris entre 0,005 et 0,6,
y est compris entre 0,05 et 0,5,
le rapport y/x étant supérieur à 0,2,
et la somme x + y étant supérieure à 0,1.

Selon un second aspect, il est proposé un procédé de fabrication d'un liquide ingérable, de préférence alimentaire, caractérisé en ce qu'il intègre dans une ou plusieurs de ses étapes, le traitement propre au procédé de traitement d'un liquide ingérable mentionné ci-dessus.

Selon un troisième aspect, il est proposé un auxiliaire technologique pour la mise en oeuvre du procédé de traitement d'un liquide ingérable mentionné ci-dessus caractérisé en ce qu'il comporte au moins un corps sous forme compacte (e.g. pastilles, billes, blocs) ou particulaire (e.g. poudre) d'un gel tel que défini ci-dessus.

Selon un quatrième aspect, il est proposé une composition de traitement d'un liquide ingérable, de préférence alimentaire, caractérisé en ce qu'elle contient l'auxiliaire technologique décrit ci-dessus et au moins un autre agent de traitement ou d'adjuvantation du liquide ingérable.

Selon un cinquième aspect, il est proposé un dispositif pour la mise en contact de l'auxiliaire technologique décrit ci-dessus, avec un liquide ingérable de préférence alimentaire, caractérisé en ce qu'il comprend au moins un support (bouchon) et/ou au moins un conteneur pour l'auxiliaire technologique.

### Brève description des dessins

**Fig. 1**

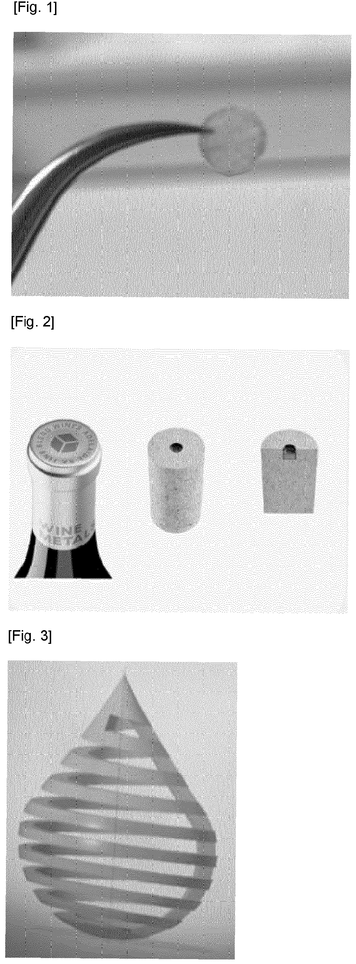

   [Fig. 1] La figure 1 est une photo d'une pastille selon l'invention.
**Fig. 2**
   [Fig. 2] La figure 2 est une photo d'un goulot d'une bouteille de vin fermée avec un bouchon étant un dispositif pour la mise en contact de l'auxiliaire technologique, ledit bouchon hors de la bouteille et une section transversale dudit bouchon.
**Fig. 3**
   [Fig. 3] La figure 3 est une photo d'un dispositif, sous forme de goute pour la mise en contact de l'auxiliaire technologique sous forme de cage.
**Fig. 4**

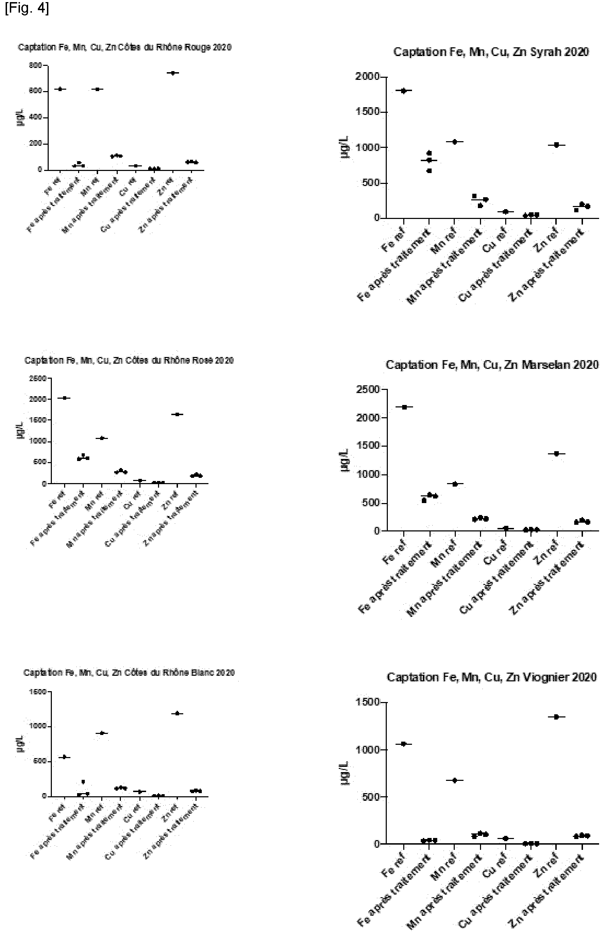

   [Fig. 4] La figure 4 est une représentation graphique des concentrations en différents métaux dans des échantillons de vins.
**Fig. 5**

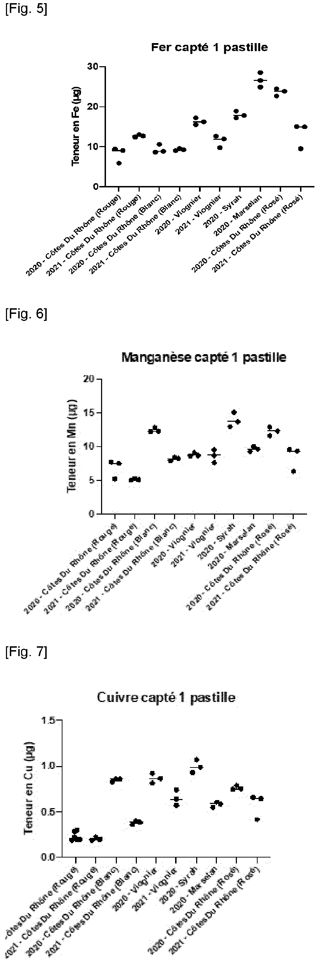

   [Fig. 5] La figure 5 est une représentation graphique de la teneur en Fe d'une pastille après traitement selon l'invention.
**Fig. 6**
   [Fig. 6] La figure 6 est une représentation graphique de la teneur en Mn d'une pastille après traitement selon l'invention.
**Fig. 7**
   [Fig. 7] La figure 7 est une représentation graphique de la teneur en Cu d'une pastille après traitement selon l'invention.
**Fig. 8**

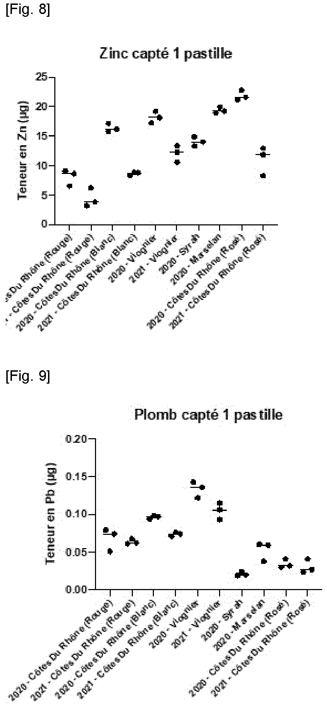

   [Fig. 8] La figure 8 est une représentation graphique de la teneur en Zn d'une pastille après traitement selon l'invention.
**Fig. 9**
   [Fig. 9] La figure 9 est une représentation graphique de la teneur en Pb d'une pastille après traitement selon l'invention.
**Fig. 10**

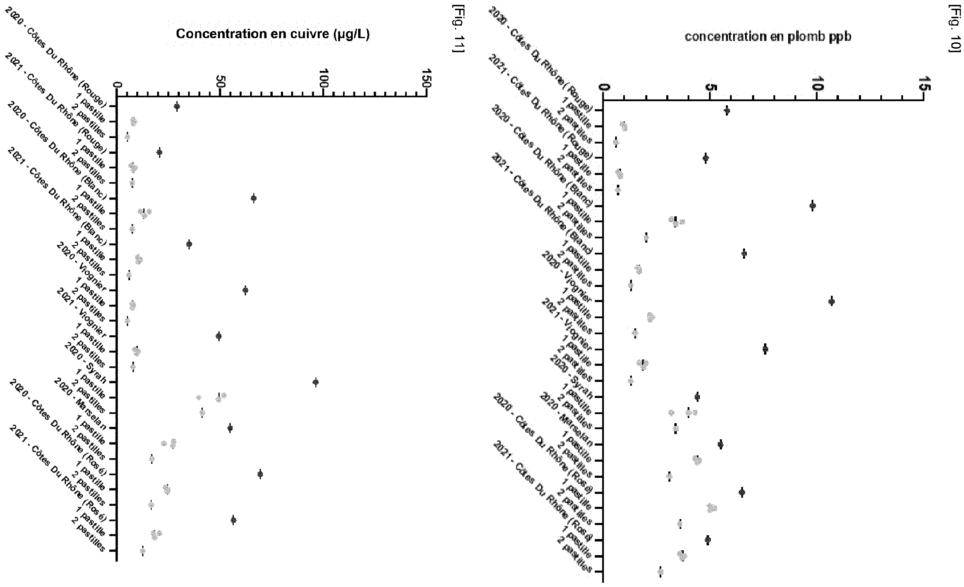

   [Fig. 10] La figure 10 est une représentation graphique de l'évolution de la concentration en Pb dans des échantillons de vins.
**Fig. 11**
   [Fig. 11] La figure 11 est une représentation graphique de l'évolution de la concentration en Cu dans des échantillons de vins.
**Fig. 12**

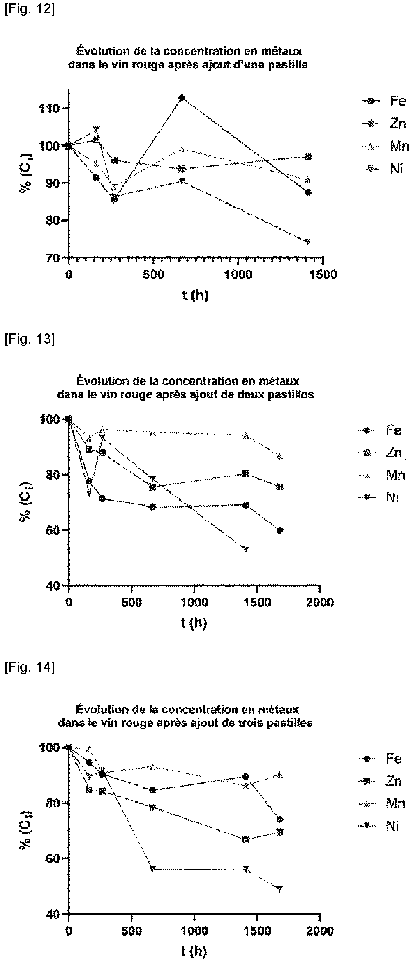

   [Fig. 12] La figure 12 est une représentation graphique de l'évolution de la concentration en différent métaux dans des échantillons de vins.
**Fig. 13**
   [Fig. 13] La figure 13 est une représentation graphique de l'évolution de la concentration en différent métaux dans des échantillons de vins.
**Fig. 14**
   [Fig. 14] La figure 14 est une représentation graphique de l'évolution de la concentration en différent métaux dans des échantillons de vins.
**Fig. 15**

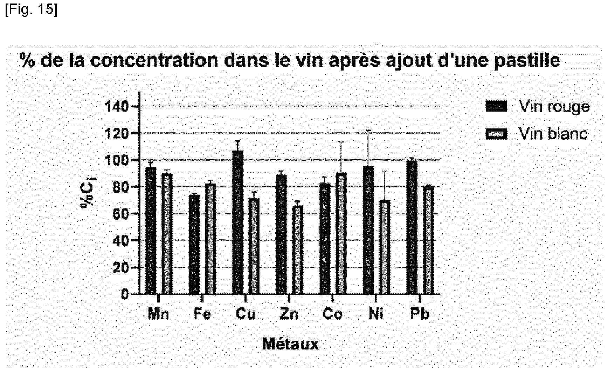

   [Fig. 15] La figure 15 est une représentation graphique de la concentration en différent métaux dans des échantillons de vins.

### Définition

Dans la présente divulgation, tous les %, les ppm et les ppb sont indiqués en masse, sauf mention contraire.

Au sens de la présente divulgation, par « chitosane » on entend un polymère naturel de type co-polysaccharide, constitué d'une distribution aléatoire (co-polysaccharide statistique) ou non (copolysaccharides à blocs ou à séquence) de D-glucosamine (GlcN) et de N-acétyl-D-glucosamine (GlcNAc), voire exclusivement de D-glucosamine, liés par des liaisons glycosidiques de type β(1->4). Le chitosane est peu présent à l'état natif dans la biomasse, il est principalement obtenu par modification chimique de la chitine, dont il est un dérivé. La chitine possède un rôle structural, on retrouve celle-ci principalement dans certains champignons dont elle constitue la paroi cellulaire (Basidiomycètes ex : agariscus campestris, agariscus bisporus, Ascomycètes, Zygomycètes, et Deutéromycètes), mais elle forme également l'exosquelette des arthropodes (crustacés, insectes) notamment chez la crevette ou le crabe et l'endosquelette des céphalopodes tels que le calamar ou la seiche. Le passage de la chitine au chitosane se fait par désacétylation, c'est-à-dire par hydrolyse alcaline des groupements acétyle pour générer des groupements amine primaire. Le chitosane est un polymère biodégradable et biocompatible, présentant des propriétés bactériostatiques et fongistatiques.

Par « gel », on entend un réseau polymère non fluide qui est gonflé par un solvant. Le réseau polymère est un réseau constitué de chaînes polymères réticulées. Les interactions responsables de la réticulation des polymères peuvent être physiques ou chimiques.

Par « hydrogel », on entend un matériau visco-élastique comportant au moins 60% en masse d'eau, et de préférence, au moins 80% en masse d'eau.

Dans le cadre de l'invention, l'hydrogel est dit physique, car les interactions responsables de la réticulation inter-chaînes donnant sa cohésion à l'hydrogel sont de type physique, et sont notamment des liaisons hydrogène et/ou des interactions hydrophobes, par opposition à un hydrogel dit chimique (nommé également hydrogel réticulé), dans lequel les interactions inter-chaînes sont de type liaison covalente. Aucun agent de réticulation chimique n'est présent dans un hydrogel purement physique.

Par « xérogel », on entend un matériau obtenu par séchage, notamment séchage d'un hydrogel, comportant moins de 60% en masse d'eau, de préférence, moins de 50% en masse d'eau et plus préférentiellement, moins de 20% en masse d'eau.

Par « aérogel », on entend un matériau semblable structuralement à un hydrogel mais dont l'eau a été remplacée par du gaz par un procédé évitant l'impact des forces capillaires du solvant sur le matériau (cf. Mike Robitzer, Laurent David, Cyrille Rochas, Francesco Di Renzo and Françoise Quignard Nanostructure of calcium alginate aerogels obtained from multistep solvent exchange route, Langmuir 2008, 24, 12547-12552*,* et Mike Robitzer, Laurent David, Cyrille Rochas, Francesco Di Renzo and Françoise Quignard, Supercritically-dried alginate aerogels retain the fibrillar structure of the hydrogels, Macromol. Symp. 2008, 273, 80-84*).*

Dans le cadre de l'invention, les masses molaires moyennes en masse (Mw) sont déterminées par chromatographie d'exclusion stérique, dont les conditions expérimentales sont décrites dans la publication « Physico-chemical studies of the gelation of chitosan in a hydroalcoholic medium » A. MONTEMBAULT, C. VITON, A. DOMARD, Biomaterials, 26(8), 933-943, 2005.

Le degré d'acétylation (DA) est déterminé en utilisant la technique de RMN du proton, en suivant la méthodologie d'Hirai (A. HIRAI, H ODANI, A. NAKAJIMA, Polymer Bulletin, 26 (1), 87-94, 1991).

### Description détaillée

Comme mentionné ci-dessus, l'invention concerne un procédé de traitement d'un liquide ingérable, de préférence alimentaire, consistant essentiellement à mettre ledit liquide ingérable en contact avec un gel, ledit gel comprenant au moins un polysaccharide statistique de formule I présentant une masse moléculaire moyenne en poids comprise entre 100kDa et 10000kDa : 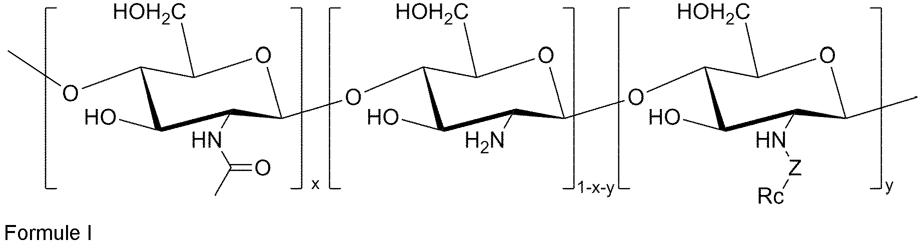 dans laquelle
Rc est un groupement comportant un agent chélatant,
Z est un liant pouvant être une simple liaison ou une chaîne hydrocarbonée comportant entre 1 et 12 atomes de carbone, ladite chaîne pouvant être linéaire ou ramifiée, pouvant comporter une ou plusieurs insaturations et pouvant comporter un ou plusieurs hétéroatomes, de préférence choisis parmi l'azote, l'oxygène, le soufre et les atomes de la famille des halogènes,
x est compris entre 0,005 et 0,6,
y est compris entre 0,05 et 0,5,
le rapport y/x étant supérieur à 0,2, et
la somme x + y étant supérieure à 0,1.

### Le traitement

Le traitement selon l'invention permet de diminuer la teneur des éléments métalliques néfastes d'un point de vue sanitaire et/ou d'un point de vue conservation sans altérer négativement le profil gustatif initial.

En particulier, le traitement comprend une extraction d'au moins un métal. L'extraction d'au moins un métal permet non seulement de diminuer les risques d'oxydations qui détériorent le vin au cours de sa conservation, mais également de diminuer les risques de développements microbiens.

Dans un mode de réalisation, ledit métal est présent à une concentration inférieure à 1 mg/L dans le liquide ingérable avant la mise en oeuvre du procédé de traitement selon l'invention.

En d'autres termes et en particulier, dans le procédé selon l'invention le traitement comprend une extraction d'au moins métal de préférence présent à une concentration inférieure à 1 mg/L, voire à 0,1 mg/L dans le liquide ingérable avant la mise en oeuvre de procédé.

### Le liquide ingérable

Le liquide ingérable, de préférence alimentaire, peut être de toute nature. Le procédé selon l'invention est toutefois particulièrement adapté à une boisson présentant une teneur en alcool supérieure ou égale à 3 % volumique et -selon un ordre croissant de préférence- 3,5 ; 4 ; 4,5 ; 5.

Le procédé selon l'invention est également adapté à une boisson présentant un pH inférieur ou égal à -selon un ordre croissant de préférence- 6 ; 5 ; 4.

Dans un mode de réalisation, le liquide alimentaire est un vin, une bière ou un spiritueux.

### Le gel

Le gel utilisé dans le procédé de traitement selon l'invention n'a pas d'impact sur les principaux éléments minéraux présents dans le liquide ingérable, en particulier le vin, par contre il permet d'extraire une grande proportion des métaux de transition impliqués dans les réactions d'oxydation comme le fer, le manganèse et le cuivre, ceux-ci étant généralement présents à une concentration autour de 0,1 mg/L à 1 mg/L. Le gel utilisé dans le procédé de traitement selon l'invention permet également de diminuer la teneur en métaux lourds, même présents à l'état de traces de l'ordre d'environ 1 µg/L.

Un des avantages du gel utilisé dans le procédé de traitement selon l'invention est qu'il peut être mis directement en contact avec le liquide ingérable.

Un autre avantage du gel utilisé dans le procédé de traitement selon l'invention est qu'il peut être extrait du liquide ingérable, avant ingestion dudit liquide ingérable.

Un avantage supplémentaire du gel utilisé dans le procédé de traitement selon l'invention est son fort caractère hydrophile qui permet de limiter drastiquement les risques de captation de molécules organiques aromatiques. De plus, ce fort caractère hydrophile confère un caractère gonflant au gel ce qui favorise la mise à disposition des sites chélatants au sein du liquide ingérable.

Dans un mode de réalisation particulier de l'invention, le gel est un hydrogel ou un xérogel, de préférence sous forme compacte (e.g. pastille, billes, blocs) ou particulaire (e.g. poudre).

Conformément à l'invention, le gel comprend au moins un polysaccharide statistique de formule I présentant une masse moléculaire moyenne en poids comprise entre 100kDa et 10000kDa :

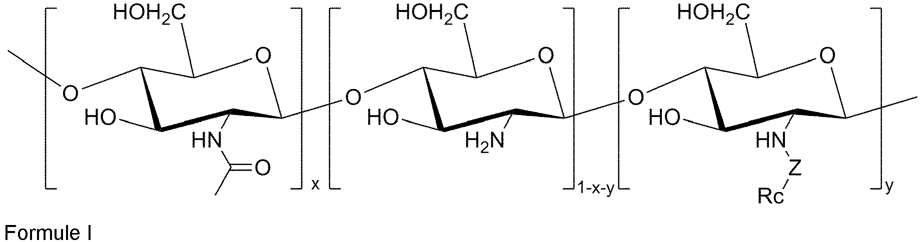

De manière avantageuse, 1 kg de gel contient entre 40 g et 100 g de polysaccharide statistique de formule I, de manière plus avantageuse entre 45 g et 75 g, de manière encore plus avantageuse environ 50g.

De manière avantageuse, x est compris entre 0,05 et 0,6, de préférence entre 0,1 et 0,35.

De manière avantageuse, y est compris entre 0,05 et 0,4, de préférence entre 0,1 et 0,3

Il est entendu que, dans la formule I ci-dessus, plusieurs groupements Rc peuvent être présents dans le polysaccharide. Ces groupements Rc peuvent être identiques ou différents les uns des autres. Tous les groupements Rc sont indépendamment choisis parmi les groupements portant un agent chélatant. Il en va de même des liants Z : plusieurs liants Z peuvent être présents, et ils peuvent être identiques ou différents les uns des autres.

En particulier, le polysaccharide statistique compris dans le gel peut être de formule Il : 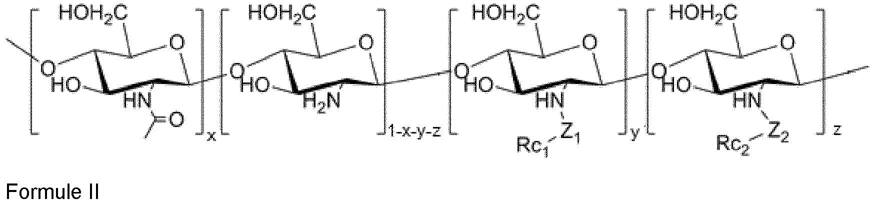 dans laquelle :
- Rc₁ et Rc₂ sont différents, et sont des groupements comportant un agent chélatant,
- Z₁ et Z₂, identiques ou différents, sont des liants pouvant être une simple liaison ou une chaîne hydrocarbonée comportant entre 1 et 12 atomes de carbone, ladite chaîne pouvant être linéaire ou ramifiée et pouvant comporter une ou plusieurs insaturations et pouvant comporter un ou plusieurs hétéroatomes, de préférence choisis parmi l'azote, l'oxygène, le soufre et les atomes de la famille des halogènes,
- x est compris entre 0,005 et 0,6, de préférence entre 0,01 et 0,3, et préférentiellement entre 0,05 et 0,1,
- y est compris entre 0,05 et 0,5, de préférence entre 0,05 et 0,2,
- z est compris entre 0 et 0,2.

Dans la présente divulgation, on entend par groupement de type Rc, les groupements Rc dans le polysaccharide de formule I, et les groupements Rc₁ et Rc₂, lorsque le groupement Rc₂ est présent, dans le polysaccharide de formule II.

Conformément à l'invention, les groupements Rc, Rc₁ et Rc₂ sont des agents chélatants. En d'autres termes les groupements Rc, Rc₁ et Rc₂ permettent de chélater un ou plusieurs métaux en formant un complexe.

Chacun des groupements Rc, Rc₁ et Rc₂ peut contenir un ou plusieurs sites de coordination. De préférence, le site de coordination est un atome d'azote ou d'oxygène. De manière avantageuse, chacun des groupements Rc, Rc₁ et Rc₂ comporte entre 4 et 8 sites de coordination, de manière plus avantageuse entre 6 et 8 sites de coordination et de manière encore plus avantageuse chacun des groupements Rc, Rc₁ et Rc₂ comporte 8 sites de coordination.

On entend par site de coordination une unique fonction capable de se lier à un métal. Par exemple, une fonction amine représente un site de coordination par la formation d'une liaison dative entre l'atome d'azote et le métal et une fonction acide hydroxamique représente également un site de coordination par la formation d'une liaison dative entre l'oxygène du motif carbonyle et par une liaison covalente avec l'oxygène du motif N-oxyde le site de coordination formant ainsi un cycle à cinq atomes.

Dans un mode de réalisation de l'invention, pour le polysaccharide de formule I, chaque groupement Rc est indépendamment choisi dans le groupe constitué du DOTA (acide 1,4,7,10-tétraazacyclododécane-N,N',N",N‴-tétracétique), NOTA (acide 1,4,7-triazacyclononane-1,4,7-triacétique), NODAGA (acide 1,4,7-triazacyclononane-1-glutarique-4,7-acide diacétique), DOTAGA (acide 2-(4,7,10-tris(carboxymethyl)-1,4,7,10-tétraazacyclododécan-1-yl)pentanedioïque), DOTAM (1,4,7,10-tetrakis(carbamoylméthyl)-1,4,7,10 tétraazacyclododécane), NOTAM (1,4,7-tetrakis(carbamoylméthyl)-1,4,7-triazacyclononane), DOTP (1,4,7,10-tétraazacyclododécane 1,4,7,10-tétrakis(méthylène phosphonate), NOTP (1,4,7-tétrakis(méthylène phosphonate)-1,4,7-triazacyclononane), TETA (acide 1,4,8,11-tétraazacyclotétradécane-N,N',N",N‴-téraacétique), TETAM (1,4,8,11-tétraazacyclotétradécane-N,N',N",N'"-tétrakis(carbamoyl méthyl), du DTPA (acide diéthylène triaminopentaacétique), NTA (acide nitrilotriacétique) et DFO (deferoxamine), de préférence dans le groupe constitué du DOTAGA, EDTA, DOTAM et DTPA et de manière plus préférentielle le groupement Rc est le DOTAGA.

Dans un mode de réalisation de l'invention, pour le polysaccharide de formule II, Rc₁ et Rc₂ sont indépendamment choisis dans le groupe constitué du DOTA, NOTA, NODAGA, DOTAGA, DOTAM, NOTAM, DOTP, NOTP, TETA, TETAM, DTPA et DFO, de préférence dans le groupe constitué du DOTAGA, DFO, DOTAM et DTPA.

Selon un mode de réalisation, pour le polysaccharide de formule II, le groupement Rc₁ est le DOTAGA, et de préférence, z=0.

Selon un mode de réalisation, pour le polysaccharide de formule II, le groupement Rc₁ est le DOTAGA et le groupement Rc₂ est le DFO

Dans la présente divulgation, on entend par liant de type Z, les liants Z dans le polysaccharide de formule I, et les liants Z₁ et Z₂, lorsque le liant Z₂ est présent, dans le polysaccharide de formule II.

Le choix des espaceurs Z, Z₁ et Z₂ dans les formules I et II dépend essentiellement des groupements Rc, Rc₁ et Rc₂ et du métal à chélater. En effet, pour des raisons stériques notamment, les groupements Rc, Rc₁ et Rc₂ peuvent être plus ou moins proches de l'azote de l'unité glucosamine.

De préférence, dans la formule I, chaque Z est indépendamment une simple liaison ou une chaîne hydrocarbonée comportant entre 1 et 12 atomes de carbone, ladite chaîne pouvant être linéaire ou ramifiée et pouvant comporter une ou plusieurs insaturations et pouvant comporter un ou plusieurs hétéroatomes, de préférence choisis parmi l'azote, l'oxygène, le soufre et les atomes de la famille des halogènes.

Selon un mode de réalisation, dans la formule I, chaque Z est indépendamment sélectionné dans le groupe constitué par une liaison, une chaine alkyle linéaire ou ramifiée comportant entre 1 et 12 atomes de carbone, et une chaîne alcényle linéaire ou ramifiée comportant entre 2 et 12 atomes de carbone,
lesdites chaînes alkyle et alcényle pouvant être interrompues par un ou plusieurs groupes aryle en C₆-C₁₀, et/ou par un ou plusieurs hétéroatomes ou groupes sélectionnés dans le groupe constitué
par -O-, -S-, -C(O)-, -NR'-, -C(O)NR'-, -NR'-C(O)-, -NR'-C(O)-NR'-, -NR'-C(O)-O-, -O-C(O)NR', - C(S)NR'-, -NR'-C(S)-, -NR'-C(S)-NR'
lesdites chaînes alkyle et alcényle pouvant être substituées par un ou plusieurs groupes sélectionnés dans le groupe constitué par les halogènes, -OR', -COOR', -SR', -NR'_{2,}
chaque R' est indépendamment H ou un alkyl en C₁-C₆.

Avantageusement, dans la formule I, chaque Z est indépendamment sélectionné dans le groupe constitué par : une liaison et une chaîne alkyle linéaire ou ramifiée comportant entre 1 et 12 atomes de carbone,
ladite chaîne alkyle pouvant être interrompue par un ou plusieurs groupes aryle en C₆-C₁₀, et/ou par un ou plusieurs hétéroatomes ou groupes sélectionnés dans le groupe constitué par-O-, -S-, -C(O)-, -NR'-, -C(O)NR'-, -NR'-C(O)-, -C(S)NR'-, -NR'-C(S)-, -NR'-C(S)-NR',
chaque R' est indépendamment H ou un alkyl en C₁-C_{6.}

Dans un mode de réalisation particulier chaque Z est une chaîne alkyle comportant entre 1 et 12 atomes de carbone.

Dans un autre mode de réalisation particulier, chaque Z est un segment polyéthylène glycol (PEG).

De préférence, dans la formule II, Z₁ et Z₂ sont indépendamment une simple liaison ou une chaîne hydrocarbonée comportant entre 1 et 12 atomes de carbone, ladite chaîne pouvant être linéaire ou ramifiée et pouvant comporter une ou plusieurs insaturations et pouvant comporter un ou plusieurs hétéroatomes, de préférence choisis parmi l'azote, l'oxygène, le soufre et les atomes de la famille des halogènes.

Selon un mode de réalisation, dans la formule II, Z₁ et Z₂ sont indépendamment sélectionnés dans le groupe constitué par : une liaison, une chaîne alkyle linéaire ou ramifiée comportant entre 1 et 12 atomes de carbone, et une chaîne alcényle linéaire ou ramifiée comportant entre 2 et 12 atomes de carbone,
lesdites chaînes alkyle et alcényle pouvant être interrompues par un ou plusieurs groupes aryle en C₆-C₁₀, et/ou par un ou plusieurs hétéroatomes ou groupes sélectionnés dans le groupe constitué par -O-, -S-, -C(O)-, -NR'-, -C(O)NR'-, -NR'-C(O)-, -NR'-C(O)-NR'-, -NR'-C(O)-O-, -O-C(O)NR', - C(S)NR'-, -NR'-C(S)-, -NR'-C(S)-NR'
lesdites chaînes alkyle et alcényle pouvant être substituées par un ou plusieurs groupes sélectionnés dans le groupe constitué par les halogènes, -OR', -COOR', -SR', -NR'_{2,}
chaque R' est indépendamment H ou un alkyl en C₁-C₆.

Avantageusement, dans la formule II, Z₁ et Z₂ sont indépendamment sélectionnés dans le groupe constitué par : une liaison et une chaîne alkyle linéaire ou ramifiée comportant entre 1 et 12 atomes de carbone,
ladite chaîne alkyle pouvant être interrompue par un ou plusieurs groupes aryle en C₆-C₁₀, et/ou par un ou plusieurs hétéroatomes ou groupes sélectionnés dans le groupe constitué par-O-, -S-, -C(O)-, -NR'-, -C(O)NR'-, -NR'-C(O)-, -C(S)NR'-, -NR'-C(S)-, -NR'-C(S)-NR',
chaque R' est indépendamment H ou un alkyl en C₁-C_{6.}

Dans un mode de réalisation particulier Z₁ et/ou Z₂ est une chaine alkyle comportant entre 1 et 12 atomes de carbone.

Dans un autre mode de réalisation particulier, Z₁ et/ou Z₂ est un polyéthylène glycol (PEG).

Conformément à l'invention, z est compris entre 0 et 0,2. En d'autres termes les unités de type C peuvent être exclusivement des unités comportant comme liant Z₁ et comme groupement portant un agent chélatant Rc₁.

Le polysaccharide statistique de formule I a une masse moléculaire moyenne en poids comprise entre 100 kDa et 10000 kDa, de manière avantageuse, la masse moléculaire moyenne en poids du polysaccharide selon l'invention est comprise entre 200 kDa et 7500 kDa, de manière plus avantageuse entre 250 kDa et 5000 kDa et de manière encore plus avantageuse, entre 300 kDa et 4000 kDa.

Dans un mode de réalisation particulier, ledit gel comprend en outre un chitosane.

Avantageusement, le chitosane possède une masse moléculaire moyenne Mw comprise entre 100 kg/mol et 1000 kg/mol, de préférence entre 200 kg/mol et 700 kg/mol.

Selon un mode de réalisation préféré, le chitosane possède un degré d'acétylation inférieur à 40%, de préférence inférieur à 10%, par exemple compris entre 0% et 10%.

Lorsque le gel comprend un chitosane, ledit chitosane représente avantageusement entre 30% et 70% en poids dudit gel.

### La mise en contact

Le procédé de traitement d'un liquide ingérable selon l'invention consiste essentiellement à la mise en contact dudit liquide ingérable avec le gel décrit ci-dessus. La mise en contact peut se faire par tous moyens. Par exemple, la mise en contact peut être effectuée par simple dépôt dans le liquide du gel, avec ou sans agitation, ou par l'intermédiaire d'un support contenant ledit gel et au travers duquel ledit liquide peut passer.

Selon le liquide à traiter et selon la méthode de mise en contact, plusieurs paramètres sont amenés à être adaptés. Par exemple, dans le cadre d'une mise en contact par simple dépôt sans agitation, la durée de mise en contact sera nécessairement plus longue que dans le cadre d'une mise en contact par simple dépôt mais avec une agitation, pour obtenir le même taux d'extraction d'un métal. Un autre paramètre est le dosage en gel et donc du nombre de groupements Rc disponibles pour la chélation de métaux.

De manière générale, la mise en contact du gel et du liquide ingérable est d'au moins une heure, et peut durer plus de 24 heures.

### Autres aspects de l'invention

Comme mentionné ci-dessus, l'invention concerne également un procédé de fabrication d'un liquide ingérable, de préférence alimentaire, caractérisé en ce qu'il intègre dans une ou plusieurs de ses étapes, le traitement propre au procédé de traitement d'un liquide ingérable mentionné ci-dessus.

Le procédé de traitement peut être mis en oeuvre dans une étape quelconque du cycle de fabrication d'un liquide ingérable. Dans un mode de réalisation, le procédé de traitement selon l'invention est avantageusement mis en oeuvre en tant que dernière étape de la fabrication d'un liquide alimentaire.

Comme indiqué précédemment, l'invention est également dirigée vers un auxiliaire technologique pour la mise en oeuvre du procédé de traitement d'un liquide ingérable caractérisé en ce qu'il comporte au moins un corps sous forme compacte (e.g. pastilles, billes, blocs) ou particulaire (e.g. poudre) d'un gel tel que défini ci-dessus. La figure 1 est une photo d'une pastille selon l'invention.

Selon une alternative, l'invention concerne en outre une composition de traitement d'un liquide ingérable, de préférence alimentaire, caractérisé en ce qu'elle contient l'auxiliaire technologique décrit ci-dessus et au moins un autre agent de traitement ou d'adjuvantation du liquide ingérable.

De manière particulière, l'invention se caractérise par un dispositif pour la mise en contact du gel ou de l'auxiliaire technologique décrit ci-dessus, avec un liquide ingérable de préférence alimentaire, caractérisé en ce qu'il comprend au moins un support et/ou au moins un conteneur pour l'auxiliaire technologique.

Ce dispositif peut comporter un bouchon supportant l'auxiliaire technologique, une capsule contenant l'auxiliaire technologique ou un conteneur ajouré.

Pour permettre la mise en contact du liquide ingérable avec l'auxiliaire technologique le dispositif présente avantageusement une ouverture. Ainsi, l'auxiliaire technologique peut être inséré dans un compartiment présentant au moins une ouverture. Le support peut être un bouchon de bouteille de vin comme illustré à la figure 2, une capsule de bouteille de vin ou de bouteille de bière, ou une cage permettant de maintenir l'auxiliaire technologique dans un espace défini au sein duquel le liquide ingérable peut passer. Une telle cage peut avoir la forme d'une goutte de liquide comme illustré à la figure 3.

Ainsi, le procédé selon l'invention est caractérisé en ce que ledit dispositif comporte un bouchon supportant ledit gel ou ledit auxiliaire technologique, une capsule contenant ledit gel ou ledit auxiliaire technologique ou un conteneur ajouré contenant ledit gel ou ledit auxiliaire technologique.

Le procédé selon l'invention étant particulièrement efficace, il est possible d'obtenir des liquides ingérables comprenant moins de 50µg/L de cuivre, préférentiellement moins de 20µg/L de cuivre, et/ou moins de 10µg/L de plomb, préférentiellement moins de 5 µg/L de plomb.

Ainsi, et en particulier, l'invention concerne également une boisson alcoolisée comprenant moins de 50µg/L de cuivre, préférentiellement moins de 20µg/L de cuivre, et/ou moins de 10µg/L de plomb, préférentiellement moins de 5 µg/L de plomb.

### Exemples

### Synthèse et caractérisation des polymères pour la fabrication des pastilles

### Synthèse du composé 1 (MEX-CD2)

Le chitosane précurseur du polysaccharide MEX-CD2 est de qualité médicale et d'origine animale. Les masses molaires moyennes en poids et en nombre (respectivement Mw = 2,583.10⁵ g/mol, Mn = 1,323.10⁵ g/mol) ont été déterminées par chromatographie d'exclusion de taille couplée à des mesures d'indice de réfraction et de diffusion de la lumière laser multiangle. Le degré d'acétylation (proportion d'unité N-acétyl-D-glucosamine) d'un tel chitosane brut a été déterminé par spectroscopie RMN ¹H par la méthode d'Hirai (Asako Hirai et al., Détermination of degree of deacetylation of chitosan by 1H NMR spectroscopy, Polymer Bulletin, 1991, 26, 87-94) et est estimé à 6,0 ± 0,5%. 60 g de chitosane sont introduits dans un réacteur de 10 L avec 4 L d'eau ultra pure et 50 mL d'acide acétique, puis le mélange est placé sous agitation mécanique à 500 RPM. Après dissolution complète du chitosane (3h), 4L de 1,2-propanediol sont ajoutés au milieu et le mélange est maintenu sous agitation jusqu'à homogénéisation (2h). 120g de DOTAGA anhydride sont ensuite introduits et le mélange est maintenu sous agitation pendant une nuit jusqu'à dissolution complète. Le produit de synthèse est ensuite purifié par filtration tangentielle à l'aide du dispositif Sartoflow^{®} Advanced avec une cassette Sartocon^{®} Slice PESU (membranes polyéthersulfone ; seuil de coupure : 100 kDa ; surface de filtration : 0,1 m²) selon un modèle de diafiltration-concentration contre 200L d'une solution d'acide acétique à 0,1M puis 200L d'une solution d'acide acétique à 5mM. La purification est suivie par une chromatographie d'exclusion de taille couplée à un détecteur UV jusqu'à obtenir moins de 5% de DOTAGA libre. Le produit est ensuite lyophilisé et le degré d'acétylation (DA) et le degré de substitution (DS) sont déterminés respectivement par RMN ¹H et par la méthode de chélation au cuivre décrite ci-dessous. Le polymère obtenu possède un taux de greffage en DOTAGA de 15%. La pureté a été vérifiée par HPLC comme mentionné ci-dessous.

### Synthèse du composé 2 (MEX-DTPA)

Le chitosane précurseur du polysaccharide MEX-DTPA (composé 2) est de qualité médicale et d'origine animale. Les masses molaires moyennes en poids et en nombre (respectivement Mw = 1,590.10⁵ g/mol, Mn = 1,238.10⁵ g/mol) ont été déterminées par chromatographie d'exclusion de taille couplée à des mesures d'indice de réfraction et de diffusion de la lumière laser multiangle. Le degré d'acétylation (proportion d'unité N-acétyl-D-glucosamine) d'un tel chitosane brut a été déterminé par spectroscopie RMN ¹H par la méthode d'Hirai (Asako Hirai et al., Détermination of degree of deacetylation of chitosan by 1H NMR spectroscopy, Polymer Bulletin, 1991, 26, 87-94) et est estimé à 6,6 ± 0,5%.

10 g de chitosane sont dissouts dans 660 mL d'eau ultrapure avec 8,39 mL d'acide acétique glacial, puis le mélange est agité à température ambiante jusqu'à homogénéisation totale. 100 mL de cette solution sont ensuite placés dans un ballon, auxquels 100 mL d'eau ultrapure sont ajoutés afin d'obtenir une concentration en chitosane de 7,5 g/L. 428 mg de DTPA-bis anhydride sont ensuite ajoutés dans la solution, puis chauffés à 30°C pour permettre la solubilisation du DTPA. Le milieu est agité une nuit. Le produit de synthèse est ensuite purifié plusieurs fois par filtration tangentielle à l'aide du dispositif Sartoflow^{®} Advanced avec une cassette Sartocon^{®} Slice PESU (membranes polyéthersulfone ; seuil de coupure : 100 kDa ; surface de filtration : 0,1 m²) selon un modèle de diafiltration-concentration contre 20L d'une solution d'acide chlorhydrique à 10 mM. Le produit est ensuite lyophilisé et le degré d'acétylation (DA) et le degré de substitution (DS) sont déterminés respectivement par RMN ¹H et par la méthode de chélation au cuivre décrite ci-dessous. Le polymère obtenu possède un taux de greffage en DTPA de 5,8%. La pureté a été vérifiée par HPLC comme mentionné ci-dessous.

### Caractérisation des polymères

Le degré d'acétylation (DA) des composés 1 et 2 est obtenu de la manière suivante : Les spectres RMN ¹H des produits à analyser sont obtenus à l'aide d'un spectromètre Avance III HD 400 MHz NanoBay de Bruker. La phase est corrigée manuellement à l'aide du pic d'eau situé à 4,7 ppm. L'intégration des pics se fait manuellement en intégrant le massif des pics entre 4,1 et 2,9 ppm et en intégrant le pic à 2,00 ppm entre 2,02 et 1,90 ppm. Le DA en pourcentage est directement obtenu en normalisant l'intégration du massif de pics à 200.

Le degré de substitution (DS) en chélate (DOTAGA pour le composé 1 ; DTPA pour le composé 2) est obtenu de la manière suivante : Différents échantillons du produit à analyser sont obtenus par dispersion du produit lyophilisé dans un tampon acétate (0,1 M acide acétique et 0,1 M ammonium acétate) pour obtenir une concentration massique finale en polymère de 0,1%. Différents volumes d'une solution de nitrate de cuivre sont ajoutés afin d'obtenir des concentrations en cuivre dans chaque échantillon allant de 0 à 1 mM puis chaque échantillon est agité. L'absorbance des solutions résultantes est ensuite mesurée à l'aide d'un spectrophotomètre UV-Visible Varian Cary^{®} 50. La détermination du DS est réalisée en traçant l'absorbance à 295 nm en fonction de la concentration en cuivre, la rupture correspondant à la quantité de chélate pour 1 g de produit.

La pureté des composés 1 et 2 est vérifiée de la façon suivante : Les chromatogrammes HPLC-SEC-UV des produits à analyser ont été enregistrés sur des échantillons à une concentration massique en polymère de 1% avec un système HPLC Shimadzu Prominence. La colonne SEC utilisée est une colonne Shodex OHpak SB-805 HQ pour le composé 2 et PolySep-GFC-P 4000 pour le composé 1 et un tampon acétate est utilisée comme éluant (0,1 M acide acétique et 0,1 M ammonium acétate). La température de fonctionnement est de 30°C et la longueur d'onde d'absorption est de 295 nm. Le débit d'éluant est de 0,8 mL / min. La pureté du produit est vérifiée par intégration du pic du DOTAGA libre sur l'intégration du pic du chitosane greffé avec du DOTAGA.

### Exemple 1 - pastille(s) de MEX-CD2 (composé 1) immergée(s) dans un faible volume de vin

Des pastilles du composé 1 sont préparées de la manière suivante : 16,76 mL d'eau ultrapure, 240 µL d'acide acétique glacial, 2,01 g du composé 1 (MEX-CD2) et 990 mg de chitosane sont introduits dans un réacteur de 100 mL sous agitation mécanique à 100 RPM. Le mélange est laissé sous agitation pendant 1h jusqu'à dissolution complète et homogénéisation du milieu. La solution obtenue est transférée dans un dispenseur de 50 mL puis centrifugée pendant 5 minutes à 3500 RPM pour supprimer les bulles d'air. La solution est placée dans des moules en PVC dont les dimensions sont Ø=1 cm et h=2mm. Après que la solution s'est étalée uniformément, le moule contenant la solution est introduit dans un bain de soude (NaOH) 3M pendant 30 minutes. Celui-ci est ensuite transféré dans un bain d'eau ultrapure pour rincer la soude pendant 1h, puis les pastilles obtenues sont retirées des moules et placées dans un second bain de 4,5 L d'eau ultrapure. Le pH est mesuré toutes les trente minutes pour vérifier le rinçage des pastilles. Au bout de 2h, le bain est remplacé par 4L d'eau ultrapure et laissé sous agitation pendant 2 jours. Les pastilles sont ensuite séchées à température ambiante pendant 24h.

Dix vins issus d'un domaine des côtes du Rhône, de différents types et de différents millésimes ont été utilisés, tous proviennent du domaine de la Catherinette situé à Laval Saint Roman :
- 2 côtes du Rhône rouge (2020 et 2021),
- 2 côtes du Rhône rosé (2020 et 2021),
- 2 côtes du Rhône blanc (2020 et 2021),
- 2 Viogniers (2020 et 2021),
- 1 Syrah (2020), et
- 1 Marselan (2020).

Pour chacun des vins on prépare 5 flacons contenant 15 ml dudit vin. Le flacon n°1 est utilisé comme témoin sans ajout de pastille, une pastille est ajoutée dans chaque flacon 2, 3 et 4, deux pastilles sont ajoutées dans le flacon n°5. Des prélèvements de 0,2 mL de vin sont réalisés après 215h et analysés par ICP-MS selon le protocole suivant :

Les analyses ICP-MS des métaux sont effectuées en utilisant un spectromètre de masse ICP-MS Agilent série 7850 équipé d'un analyseur quadripolaire et d'un passeur d'échantillon intégré.

Les conditions de fonctionnement de l'appareil sont les suivantes :

**[Tab. 1]**

| **Puissance du plasma** | **1550 W** |
|---|---|
| Profondeur d'échantillonnage (distance cône - torche) | 8 mm |
| Débit gaz plasma (Ar) | 15 L/min |
| Débit gaz vecteur (Ar) | 1 L/min |
| Débit gaz additionnel (Ar) | 1 L/min |
| Débit gaz de collision (He) | 4,3 mL/min |

Les conditions des acquisitions semi-quantitatives sont les suivantes :

**[Tab. 2]**

| **Mode d'acquisition** | **Spectre** |
|---|---|
| Standard | Standard 28 éléments à 20 ppb |
| Blanc | HNO₃ 1% |
| Nombre de masses | 60 |
| Temps d'intégration | 0,6 sec/point |
| Nombre de points par masse | 6 |
| Temps d'acquisition | 216 sec |
| Nombre de répétitions | 1 |
| Temps de prélèvement de l'échantillon | 50 sec |
| Temps de stabilisation | 30 sec |
| Rinçage post-acquisition | 3 × 45 sec |
| Durée totale d'analyse | 431 sec |

Juste avant l'analyse, les échantillons de vins et de pastilles sont dilués par 15 dans HNOs 1 %.

Les quantités de Fer (Fe), de Manganèse (Mn), de Cuivre (Cu) et de Zinc (Zn) dans les flacons n°1, n° 2, n°3 et n°4 des vins de 2020 ont été mesurées. Les résultats sont représentés sur la figure 4. Toutes les concentrations en Fe, Mn, Cu et Zn sont fortement diminuées dans les six vins traités avec une pastille selon l'invention.

Les pastilles présentes dans les flacons n°2, n°3 et n°4 de chacun des vins ont été analysées pour connaitre leur teneur respective en Fe (figure 5), en Mn (figure 6), en Cu (figure 7), r en Zn (figure 8) et en plomb (Pb) (figure 9). Les figures 5 à 9 montrent que le Fe, le Mn, le Cu, le Zn et le Pb sont captés par la pastille selon l'invention et demeurent encapsulés dans la pastille.

Les concentrations en Pb dans les flacons n°1 à n°5 de l'ensemble des vins ont été mesurées (figure 10).

On observe une forte diminution de la quantité de plomb, même pour des concentrations initiales de l'ordre de la dizaine de ppb. Ces résultats montrent qu'il est possible de diminuer la quantité de plomb en dessous de 5 ppb et même en dessous de 1 ppb dans le vin après ajout de pastilles.

Ce résultat est très prometteur en vue de l'utilisation de ces pastilles pour décontaminer le vin de ces métaux lourds, le plomb étant en particulier connu pour avoir un impact sur les maladies cardiovasculaires.

Les concentrations en Cu dans les flacons n°1 à n°5 de l'ensemble des vins ont été mesurées (figure 11).

On observe que lorsque la concentration en Cu est initialement élevée, l'ajout d'une deuxième pastille (flacons n°5) permet de diminuer encore plus la concentration en Cu à l'issue du traitement.

### Exemple 2 - pastille(s) de MEX-DTPA (composé 2) immergée(s) dans le vin

Des pastilles du composé 2 sont préparées de la manière suivante : 6 mL d'eau ultrapure, 305 µL d'acide acétique glacial, 353 mg du composé 2 (MEX-DTPA) et 706 mg de chitosane sont ajoutés sous agitation mécanique à 100 RPM dans un réacteur de 100 mL. Le mélange est laissé sous agitation pendant 1h jusqu'à dissolution complète et homogénéisation du milieu. La solution obtenue est transférée dans un dispenseur de 50 mL puis centrifugée pendant 5 minutes à 3500 RPM pour supprimer les bulles d'air. La solution est placée dans des moules en PVC dont les dimensions sont Ø=1 cm et h=2mm. Après que la solution s'est étalée uniformément, le moule contenant la solution est introduit dans un bain de soude (NaOH) 3M pendant 30 minutes. Celui-ci est ensuite transféré dans un bain d'eau ultrapure pour rincer la soude pendant 1h, puis les pastilles sont retirées des moules et placées dans un second bain de 4,5 L d'eau ultrapure. Le pH est mesuré toutes les trente minutes pour vérifier le rinçage des pastilles. Au bout de 2h, le bain est remplacé par 4L d'eau ultrapure et l'ensemble est laissé sous agitation pendant 2 jours. Les pastilles sont ensuite séchées à température ambiante pendant 24h puis pesées : on obtient une masse moyenne de 25,6 mg par pastille.

Afin d'évaluer les capacités de chélation des pastilles, on remplit 4 flacons en verre de 100 mL selon la disposition suivante :
Dans les quatre flacons, on introduit 100 mL de vin rouge (Château Merigot 2018, Côtes de Bourg, Dominique Raimond). Le flacon n°1 est utilisé comme témoin sans ajout de pastille, une pastille est ajoutée dans le flacon 2, deux pastilles sont ajoutées dans le flacon 3 et trois pastilles sont ajoutées dans le flacon 4. Le tableau suivant résume les différentes masses des pastilles ajoutées :

**[Tab. 3]**

| **Échantillon** | **VR0P** | **VR1P** | **VR2P** | | **VR3P** | | |
|---|---|---|---|---|---|---|---|
| **n°pastille** | - | 1 | 2 | 3 | 4 | 5 | 6 |
| **mpastille (mg)** | - | 26,4 | 26,6 | 25,5 | 26,4 | 24,2 | 27,8 |
| **mtot (mg)** | - | 26,4 | 52,1 | | 78,4 | | |

Des prélèvements de 1 mL de chaque flacon sont effectués à différents points dans le temps (t = 0h, 164h, 267h, 667h, 1411h, 1680h) ; les échantillons sont conservés dans des tubes VWR métal free de 2 mL.

Après le dernier prélèvement, les pastilles sont ôtées du milieu, pesées puis dissoutes dans 3 mL d'acide nitrique 69% (w/w) et 1 mL d'eau ultrapure pendant une heure. Le tableau suivant résume les masses des pastilles collectées après 70 jours dans le vin et répertoriées dans le tableau suivant :

**[Tab. 4]**

| **Echantillon** | **VR0P** | **VR1P** | **VR2P** | **VR3P** |
|---|---|---|---|---|
| **Nombre de pastilles** | 0 | 1 | 2 | 3 |
| **Masse totale des pastilles (mg)** | 0 | 55 | 112 | 183 |

Les pastilles redispersées, ainsi que les prélèvements de vin sont analysés par ICP-MS semi-quantitative d'après la méthode ci-dessus après dilution par 15 dans de l'acide nitrique 1% (w/w).

L'analyse élémentaire des prélèvements de vin montre une baisse de la concentration de plusieurs métaux au cours du temps.

On peut voir sur les figures 12, 13 et 14 que la baisse de la concentration en Fe, Zn, Mn et Ni s'accentue à mesure que le nombre de pastilles augmente. Par ailleurs, quel que soit le nombre de pastilles ajoutées, les concentrations dans le vin en Fe, en Zn, en Mn et en Ni diminuent globalement au cours du temps après l'ajout des pastilles.

Les pastilles récupérées dans les flacons puis redispersées ont également été analysées par analyse élémentaire. Le tableau suivant résume les masses en Fe, Zn, Mn et Ni dans les pastilles après dissolution dans l'acide nitrique 52% (3 mL HNOs 69% + 1 mL H₂O), ainsi que les masses obtenues par pastille :

**[Tab. 5]**

| | | Fe | Mn | Cu | Zn |
|---|---|---|---|---|---|
| VR1P | Masse totale captée (µg) | 291 | 44,2 | 15,1 | 148 |
| | Masse captée par pastille (µg) | 291 | 44,2 | 15,1 | 148 |
| VR2P | Masse totale captée (µg) | 612 | 83,1 | 25,1 | 286 |
| | Masse captée par pastille (µg) | 306 | 41,55 | 12,55 | 143 |
| VR3P | Masse totale captée (µg) | 782 | 133 | 35,2 | 367 |
| | Masse captée par pastille (µg) | 261,5 | 44,33 | 11,73 | 123,33 |

la masse captée par pastille varie peu quel que soit le nombre de pastilles pour un métal donné, ainsi, la quantité totale de métal capturé dans le vin est proportionnelle au nombre de pastilles introduites.

### Exemple 3 - pastille de MEX-CD2 (composé 1) immergée dans la bouteille de vin

Des pastilles du composé 1 sont préparées de la manière suivante : 20,95 mL d'eau ultrapure, 286 µL d'acide acétique glacial, 2,513 g du polymère obtenu (MEX-CD2) et 1,238 g de chitosane sont ajoutés sous agitation mécanique à 100 RPM dans un réacteur de 100 mL. Le mélange est laissé sous agitation pendant 1h jusqu'à dissolution complète et homogénéisation du milieu. La solution obtenue est transférée dans un dispenseur de 50 mL puis centrifugée pendant 10 minutes à 4000 RPM pour supprimer les bulles d'air. La solution est placée dans des moules en PVC dont les dimensions sont 0=1,5 cm et h=8 mm. Après que la solution se soit étalée uniformément, le moule contenant la solution est introduit dans un bain de soude (NaOH) 3M pendant 1h. Celui-ci est ensuite transféré dans un bain d'eau ultrapure pour rincer la soude pendant 2h, puis les pastilles sont retirées des moules et placées dans un second bain de 10 L d'eau ultrapure pendant une nuit. Le pH est ensuite mesuré (pH = 10,42), puis le bain est remplacé par 10 L d'eau ultrapure et changé au bout de 4h (pH = 10,12). L'ensemble est alors laissé sous agitation pendant 48h. Les pastilles sont ensuite transférées dans un bain de 200 mL d'eau ultrapure, puis le pH est mesuré au bout de 2h (pH = 7,94). Les pastilles sont pesées : on obtient une masse moyenne de 3,53 g par pastille. Les pastilles sont ensuite séchées à 37°C pendant 24h puis pesées ; le tableau suivant résume les masses des pastilles obtenues :

**[Tab. 6]**

| n° de pastille | 1 | 2 | 3 | 4 | 5 | 6 | 7 | 8 | 9 |
|---|---|---|---|---|---|---|---|---|---|
| Masse (mg) | 167 | 171 | 164 | 162 | 125 | 162 | 130 | 196 | 145 |

Afin d'évaluer les capacités de chélation des pastilles, le protocole suivant est mis en place : 12 bouteilles de vin sont utilisées : 6 bouteilles de vin blanc (Petit Chablis 2020, Domaine Yvon & Laurent Vocoret) et 6 bouteilles de vin rouge (Château Merigot 2018, Côtes de Bourg, Dominique Raimond). Pour les douze bouteilles sont ouvertes puis un pastille est introduite dans quatre bouteilles de Petit Chablis et dans quatre bouteilles de Château Merigot, dans deux bouteilles de chaque vin aucune pastille n'est ajoutée. Les douze bouteilles sont ensuite refermées.

Au bout de 3,5 mois, 3 bouteilles de chaque vin sont ouvertes (2 avec pastilles et une sans pastille), un prélèvement du vin (20 mL) est réalisé et les pastilles sont collectées et pesées puis dissoutes dans 3 mL d'acide nitrique 69% (w/w) et 1 mL d'eau ultrapure pendant une heure. Les pastilles redispersées, ainsi que les prélèvements de vin sont analysés par ICP-MS semi-quantitative après dilution par 15 dans de l'acide nitrique 1% (w/w) Le tableau suivant résume les masses des pastilles collectées après 3,5 mois dans le vin :

**[Tab. 7]**

| Echantillon | masse (mg) | Masse moyenne (mg) |
|---|---|---|
| CHABLIS 1 | 327,6 | 376,45 |
| CHABLIS 2 | 425,3 | |
| MERIGOT 1 | 302,8 | 348,05 |
| MERIGOT 2 | 393,3 | |

La figure 15 montre les concentrations en différents métaux dans les échantillons en pourcentage par rapport à la concentration des bouteilles sans pastilles. Pour le Fe, le Mn et le Zn, la concentration dans les vins diminue avec le traitement par une pastille avec des diminutions en moyenne davantage accentuées (>20%) pour le vin blanc. Concernant le Cu le Ni et le Pb, une forte diminution de la concentration dans le vin blanc est observée, alors que dans le vin rouge le ces métaux ne sont pas captés de manière significative par la pastille.

La concentration en métaux dans les pastilles après redispersion a également été évaluée ; afin d'obtenir uniquement la concentration en métaux captée, on lui soustrait la concentration en métaux dans une pastille sèche redispersée dans 3 mL d'acide nitrique 69% (w/w) et 1 mL d'eau ultrapure. Le tableau suivant résume les masses moyennes en métaux extraites par les pastilles dans le vin :

**[Tab. 8]**

| | Mn | Fe | Cu | Zn | Co | Ni | Cd | Pb | U |
|---|---|---|---|---|---|---|---|---|---|
| Masse en métaux extraite par la pastille en 3,5 mois (µg) dans le vin rouge | 561 | 2200 | 78,5 | 1140 | 1,45 | 0,0445 | 0,484 | 0,952 | 0,0199 |
| Masse en métaux extraite par la pastille en 3,5 mois (µg) dans le vin blanc | 519 | 1090 | 119 | 1170 | 4,89 | 8,00 | 7,24 | 7,24 | 0,220 |

## Revendications

1. Procédé de traitement d'un liquide ingérable, de préférence alimentaire, consistant essentiellement à mettre ledit liquide ingérable en contact avec un gel, ledit gel comprenant au moins un polysaccharide statistique de formule I présentant une masse moléculaire moyenne en poids comprise entre 100kDa et 10000kDa : 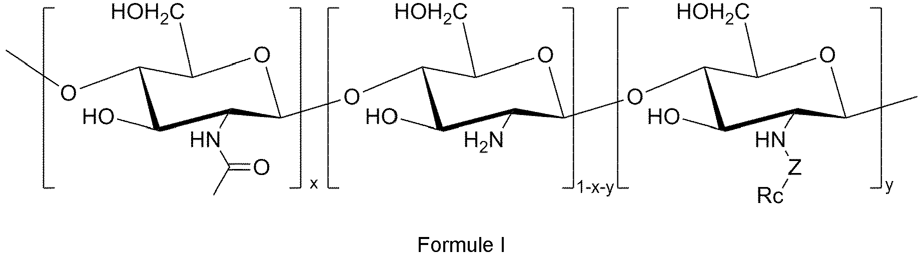
dans laquelle
Rc est un groupement comportant un agent chélatant,
Z est un liant pouvant être une simple liaison ou une chaine hydrocarbonée comportant entre 1 et 12 atomes de carbone, ladite chaîne pouvant être linéaire ou ramifiée, pouvant comporter une ou plusieurs insaturations et pouvant comporter un ou plusieurs hétéroatomes, de préférence choisis parmi l'azote, l'oxygène, le soufre et les atomes de la famille des halogènes,
x est compris entre 0,005 et 0,6,
y est compris entre 0,05 et 0,5,
le rapport y/x étant supérieur à 0,2,
la somme x + y étant supérieure à 0,1,
**caractérisé en ce que** le liquide ingérable, de préférence alimentaire, est une boisson présentant une teneur en alcool supérieure ou égale à 3 en % volumique et -selon un ordre croissant de préférence-supérieure ou égale 3,5 ; 4 ; 4,5 ; 5 en % volumique.

2. Procédé selon la revendication 1, **caractérisé en ce que** ledit gel comprend en outre un chitosane.

3. Procédé selon l'une quelconque des revendications précédentes, **caractérisé en ce que** le traitement comprend une extraction d'au moins métal de préférence présent à une concentration inférieure à 1 mg/L, voire à 0,1 mg/L dans le liquide ingérable avant la mise en oeuvre de procédé.

4. Procédé selon l'une quelconque des revendications précédentes, **caractérisé en ce que** le liquide ingérable, de préférence alimentaire, est une boisson présentant un pH inférieur ou égal à -selon un ordre croissant de préférence- 6 ; 5 ; 4.

5. Procédé selon l'une quelconque des revendications précédentes, **caractérisé en ce que** le liquide alimentaire est un vin, une bière ou un spiritueux.

6. Procédé selon l'une quelconque des revendications précédentes, **caractérisé en ce que** le gel est un hydrogel ou un xérogel, de préférence sous forme compacte (e.g. pastille, billes, blocs) ou particulaire (e.g. poudre).

7. Procédé selon l'une quelconque des revendications précédentes, **caractérisé en ce que** ladite mise en contact est réalisée avec un auxiliaire technologique comprenant ledit gel et au moins un autre agent de traitement ou d'adjuvantation du liquide ingérable, de préférence alimentaire.

8. Procédé selon l'une quelconque des revendications 1 à 6, **caractérisé en ce que** ladite mise en contact est réalisée à l'aide d'un dispositif comprenant au moins un support et/ou au moins un conteneur pour ledit gel.

9. Procédé selon la revendication 8, **caractérisé en ce que** ledit dispositif comporte un bouchon supportant ledit gel, une capsule contenant l'auxiliaire technologique ou un conteneur ajouré.

10. Procédé selon la revendication 7, **caractérisé en ce que** ladite mise en contact est réalisée à l'aide d'un dispositif comprenant au moins un support et/ou au moins un conteneur pour ledit auxiliaire technologique.

11. Procédé selon la revendication 10, **caractérisé en ce que** ledit dispositif comporte un bouchon supportant l'auxiliaire technologique, une capsule contenant l'auxiliaire technologique ou un conteneur ajouré.

12. Procédé de fabrication d'un liquide ingérable, de préférence alimentaire, **caractérisé en ce qu'**il intègre dans une ou plusieurs de ses étapes, le traitement propre au procédé selon l'une quelconque des revendications précédentes.
